# EUROPÄISCHE PATENTSCHRIFT

(11) **EP 4 021 621 B1**
(45) Veröffentlichungstag und Bekanntmachung des Hinweises auf die Patenterteilung: **24.01.2024**
(21) Anmeldenummer: 20760881.1
(22) Anmeldetag: 28.08.2020
(51) Int. Cl.: B01D 69/12, B01D 67/00, B01D 71/54

(54) **WASSERDAMPF-PERMEABLER VERBUNDSTOFF**
WATER-VAPOR PERMEABLE COMPOSITE
MATIÈRE COMPOSITE PERMÉABLE À LA VAPEUR D'EAU

(30) Priorität: 30.08.2019 EP 19194556
(43) Veröffentlichungstag der Anmeldung: 06.07.2022
(73) Patentinhaber: BASF SE, 67056 Ludwigshafen am Rhein (DE)
(72) Erfinder: PRISSOK, Frank, 49448 Lemfoerde (DE); AHLERS, Jürgen, 68649 Gross-Rohrheim (DE); DOROODIAN, Amir, 49448 Lemfoerde (DE); HARMS, Michael, 49948 Lemfoerde (DE)
(74) Vertreter: BASF IP Association
(86) Internationale Anmeldenummer: PCT/EP2020/074045
(87) Internationale Veröffentlichungsnummer: WO 2021/038021

(56) Entgegenhaltungen:
- WO-A1-2008/087087
- KR-A- 20170 120 807
- KR-A- 20170 120 818
- KR-A- 20170 120 821
- US-A1- 2010 323 573
- US-A1- 2014 332 459

## Beschreibung

Die Erfindung betrifft ein Verfahren zur Herstellung eines Verbundstoffes und einen Verbundstoff, erhalten oder erhältlich nach diesem Verfahren. Ebenfalls betrifft die Erfindung die Verwendung eines Verbundstoffes, erhalten oder erhältlich nach diesem Verfahren, für die Herstellung eines Funktionsartikels.

Funktionsartikel, insbesondere Funktionsbekleidung für diverse Anwendungsbereiche, sind in diversen Ausführungen bekannt, wobei oftmals beschichtete Gewebe oder Folien- bzw. Membranlaminate verwendet werden. Anforderungen an Funktionsartikel sind meist eine ausreichende Stabilität bzw. Haltbarkeit bei gleichzeitig zufriedenstellender Reißdehnung und Wasserbeständigkeit gegen von außen auftreffende Flüssigkeiten, dies allerdings bei gleichzeitig gewünschter Atmungsaktivität/Wasserdampfdurchlässigkeit. Bei Membranlaminaten, welche in der Regel aus einer Tragschicht, der Membran und einer strapazierfähigen Deckschicht bestehen, erfolgt die Herstellung in der Regel durch Vernähen von Laminatsegmenten und Verkleben der Naht mit einem wasserdichten Tape. Dabei führen allerdings die Nahtstiche wieder zu Eintrittsmöglichkeiten für Wasser, weshalb anschließend meist noch ein Versiegeln der Naht mit einem darüber liegenden Adhäsiv oder einem Dichtungsband erfolgen muss. Ein normales (heißes) Verschweißen einzelner Schichten ist oftmals nicht möglich, da dabei die Mikro-/Nanostrukturen der einzelnen Schichten so zerstört werden, dass die gewünschten Eigenschaften -insbesondere die Gasdurchlässigkeit- im verschweißten Verbund nicht mehr erreicht werden oder die Schichten sich schlicht nicht verschweißen lassen, da sie bei der verwendeten Schweißtemperatur nicht thermoplastisch sind oder keinen schlüssigen Verbund durch Verschweißung eingehen. Unter Verschweißen bzw. Schweißen versteht man gemäß DIN ISO 857-1 (ehemals DIN 1910-1) das unlösbare Verbinden von Bauteilen unter Anwendung von Wärme oder Druck (mit oder ohne Schweißzusatzwerkstoffe). Die Verbindung erfolgt abhängig vom Schweißverfahren in einer Schweißnaht oder einem Schweißpunkt. Die zum Schweißen notwendige Energie wird hierbei stets von außen zugeführt.

EP 2 077 733 81 beschreibt ein mehrlagiges Kleidungsstück, welches Feuchtigkeitsdämpfe durchlässt, bei welchem eine Schicht aus Nanofasern zwischen zwei gewebten Stofflagen bzw. Stofflagen aus Maschenware eingebettet ist. Wie aus den Beispielen ersichtlich wird ein Nylon-Vlies zwischen zwei Lagen aus Polyester-Vlies (Maschenware) eingebettet, wobei für die Verbindung ein Lösungsmittelbasiertes Urethan-Adhäsiv eingesetzt wird - ein Kaltverschweißen bzw. eine schlüssige Verbindung durch Verschweißen solcher Schichten wäre aufgrund der inkompatiblen Materialien nicht möglich. US 2010/0028553 A1 offenbart ein Verfahren zur Herstellung einer Nanofaserschicht, welche auf einem Substrat aufgebracht wird. Das Substrat hierbei sind hydrophobe Polypropylen-Vliese - zum polymeren Material der aufgebrachten Nanofasern werden keine Angaben gemacht. Eine Elektrospinnvorrichtung wird ebenfalls in der WO 2012/111930 A2 beschrieben.

In der KR 2017120821 A wird thematisiert, wie ein Polymervlies mittels Elektrospinnen auf einem Trennpapier erzeugt, auf ein erstes Polyurethan-Basismaterial übertragen und dann mit diesem und einem weiteren Polyurethan-Basismaterial durch Wärmeeinwirkung verbunden wird. Ähnlich wird in der KR 2017120807 A auf einem Polyurethan-Basismaterial beidseitig jeweils ein Polymervlies aufgebracht. In beiden Schriften werden keine Angaben zur Natur des Polyurethan-Basismaterials gemacht und für die Vliesschicht werden diverse Polymere beschrieben. Vergleichbar werden in der KR 2017120818 A jeweils zwei Polymervliese mittels Elektrospinnen auf Trennpapier erzeugt und dann durch Wärmeeinwirkung mit einem Polyurethan-Basismaterial verbunden. Nachträgliches Verschweißen einzelner Schichten wie in den oben genannten koreanischen Schriften führt dazu, dass die Mikro-/Nanostrukturen der einzelnen Schichten so zerstört werden, dass die gewünschten Eigenschaften -beispielsweise die Gasdurchlässigkeit- im verschweißten Verbund nicht mehr erreicht werden. WO 2008/087087 A1 offenbart eine Membran für ein Bekleidungsstück bestehend aus einer Polyurethantrennschicht auf einem Polyurethanträger.

Zusammenfassend lässt sich sagen, dass Verbundstoffe, in welchen ein Vliesstoff mit einer Schicht eines anders geformten Materials verbunden werden soll, sich schlecht bzw. gar nicht mittels der üblichen Methoden wie Vernähen, Verkleben oder nachträglichem (heißem) Verschweißen erzeugen lassen. Selbst, wenn die Verbindung der Schichten gelingt, sind die erhaltenen Eigenschaften ungeeignet für die weitere Verwendung in einem Funktionsartikel.

Übliche Vliese, bei denen die Fasern einen Durchmesser im Bereich von 1 bis 50 µm und das Vlies eine Maschenweite im Bereich von 10 bis 100 µm aufweist, haben keine ausreichende Wasserdichtigkeit allein, sind als Unterlage für Verbundstoffe aber interessant. Bei Vliesen liegt ein loser Faserflor vor, welcher beispielsweise durch Wärme verfestigt wird und allein über Formschluss und/oder die Kohäsion und/oder die Adhäsion zusammengehalten wird. Damit unterscheiden sich Vliese von Geweben und von Maschenware. Bei Geweben sind die Flächen durch Verkreuzen von zwei Fadensystemen hergestellt; bei Maschenware sind mittels Faden gebildete Schleifen in andere Schleifen hineingeschlungen. Die Verwendung von Geweben, aber auch von Maschenware als Substrat führt meist dazu, dass die erhaltenen Verbundsysteme zu starr sind bzw. keine ausreichende Reißdehnung aufweisen. Weiterhin ist die Herstellung via "Stricken" deutlich teurer und die Maschenweite grober da mit einer Art Nadel gearbeitet werden muss, außerdem wird beim "Stricken" ein Gleitmittel erforderlich, damit die Fäden über die Nadeln gleiten. Folien sind als Substrate meist nicht geeignet, da sie oftmals keine ausreichende Wasserdampfdurchlässigkeit erlauben.

Ein Verfahren, bei welchem Elektrospinning für die Aufbringung einer Vliesschicht auf einer anderen Vliesschicht eingesetzt wird, und ein erhaltener Vlies-Verbundstoff sind in der noch unveröffentlichten Anmeldung EP 19168078.4 (Anmeldetag 9. April 2019) beschrieben.

Die Aufgabe der vorliegenden Erfindung war die Bereitstellung eines Verfahrens zur Herstellung eines Verbundstoffes basierend auf einer Vliesschicht, welches die oben genannten Nachteile überwindet.

Die Aufgabe wurde gelöst mit einem Verfahren zur Herstellung eines Verbundstoffes umfassend:
a) Bereitstellen einer Vliesschicht (i) umfassend Fasern aus einem ersten thermoplastischen Polyurethan und aufweisend Maschen mit einer Maschenweite im Bereich von 10 bis 100 µm, bestimmt mittels Rasterelektronenmikroskopie;
b) Bereitstellen einer Membranschicht (ii) umfassend ein zweites thermoplastisches Polyurethan, welches zu dem ersten thermoplastischen Polyurethan der Vliesschicht (i) kompatibel ist, wobei die Membranschicht porös ist und Poren mit einem mittleren Porendurchmesser kleiner als 2000 nm, bestimmt mittels Hg-Porosimetrie gemäß DIN 66133, aufweist (ii.2);
c) Aufbringen der Membranschicht (ii) auf der Vliesschicht (i) und formschlüssiges Verbinden von (i) und (ii) mittels Kaltverschweißen;

unter Erhalt eines Verbundstoffes; wobei
Kaltverschweißen gemäß (c) bedeutet, dass die Fasern der Vliesschicht (i) und die Membran (ii) im Kontaktbereich zumindest anteilig miteinander eine formschlüssige Verbindung ausbilden, wobei aufgrund der Anwesenheit von Lösungsmittel zunächst ein Anlösen der Vliesschicht (i) und/oder der Membranschicht (ii) und anschließend ein Aushärten der Membranschicht (ii) auf der Vliesschicht (i) bei Entfernung des Lösungsmittels erfolgt.

Ein "Vlies" bzw. eine "Vliesschicht" meint wie oben einleitend bereits kurz erwähnt ein nicht-gewebtes Flächengebilde. Ein "Vlies" bzw. eine "Vliesschicht" besteht ganz oder zu einem wesentlichen Teil (> 90 Gewichts-%) aus Fasern, wobei "Faser" Spinnfasern, Filamente (Endlosfasern) und Fasern mit einem Schlankheitsgrad (Verhältnis von Faserlänge in mm zu Faserdurchmesser in mm) von mindestens 300 umfasst. Der Durchmesser der Fasern (Faserdurchmesser) der Vliesschicht (i) ist bestimmt mittels Rasterelektronenmikroskopie (REM). Verbundarten der Fasern untereinander im Vlies sind der Formschluss (durch Verschlingung) und/oder die Kohäsion und/oder die Adhäsion, wobei die Fasern im Vlies orientiert oder wirr angeordnet sind. Eine "Masche" ist eine Faser-Schlinge, die in ein oder mehrere weitere Faserschlingen eingehängt ist. Die "Maschenweite" (w) ist der lichte Abstand zwischen zwei benachbarten Fasern bzw. Faserabschnitten in der Mitte der Masche gemessen. Die Maschenweite wird mittels Rasterelektronenmikroskopie bestimmt. Die entsprechende Öffnung zwischen den benachbarten Fasern bzw. Faserabschnitten wird als "Maschenöffnung" bezeichnet.

Eine "Membranschicht" wird hier verkürzt auch synonym als Membran bezeichnet. Eine "Membran" meinte eine (ultra)dünne Schicht umfassend das zweite thermoplastische Elastomer; synonyme Bezeichnung: Folie, wobei "dünn" eine Schichtdicke von weniger als 50 µm bedeutet. "Ultradünn" meint Schichtdicken von weniger als 30 µm. "Porenfrei" bei (ii. 1) bedeutet, dass die Membran keine durchgängige Öffnung von der Ober- zur Unterseite besitzt, durch die ein Gas sich frei bewegen kann. "Porös" bedeutet, dass die Membran durchgängige Öffnungen von der Ober- zur Unterseite der Membran besitzt, durch die ein Gas sich frei bewegen kann. "Miteinander formschlüssig verbunden" meint, dass die Polymerketten des ersten und des zweiten thermoplastischen Elastomers bei der Verbindung bzw. im Kontaktbereich zwischen Vliesschicht (i) und Membranschicht (ii) miteinander verschlungen werden bzw. sind. Die Verbindung beruht auf (Kalt-)Verschweißen, d.h. aufgrund der Anwesenheit von Lösungsmittel erfolgtem Anquellen und/oder Anlösen der Vliesschicht (i) und/oder der Membranschicht (ii) und anschließendem Aushärten der Membranschicht (ii) auf der Vliesschicht (i) bei Entfernung des Lösungsmittels. Die Entfernung des Lösungsmittels erfolgt bevorzugt bei einer Temperatur im Bereich von 23 bis < 100°C, weiter bevorzugt im Bereich von 23 bis 99 °C, bevorzugt bei einem Druck im Bereich von 1 bis 1500 mbar, weiter bevorzugt im Bereich von 1 bis 1013 mbar. Bevorzugt erfolgt das Entfernen des Lösungsmittels über einen Zeitraum vom 10 Minuten bis 24 Stunden, weiter bevorzugt über einen Zeitraum von 1 Stunde bis 10 Stunden. Die "Schichtdicke" einer Membran bzw. einer Membranschicht ist jeweils bestimmt mittels Mikrometerschraube oder Rasterelektronenmikroskopie (REM), bevorzugt erfolgt die Bestimmung mittels REM.

Der, nicht von der vorliegenden Erfindung umfasste, aus dem erfindungsgemäßen Verfahren erhaltene oder erhältliche, Verbundstoff umfasst
i) eine Vliesschicht umfassend Fasern aus einem ersten thermoplastischen Elastomer aufweisend Maschen mit einer Maschenweite im Bereich von 10 bis 100 µm;
ii) eine Membranschicht umfassend ein zweites thermoplastisches Elastomer und aufweisend eine Schichtdicke von weniger als 30 µm, wobei die Membran entweder porenfrei (ii. 1) ist; oder porös ist und Poren mit einem mittleren Porendurchmesser kleiner als 2000 nm, bestimmt mittels Hg-Porosimetrie gemäß DIN 66133, aufweist (ii.2);
wobei die Membran (ii) zumindest teilweise in direktem Kontakt mit den Fasern der Vliesschicht (i) steht, sowie die Maschenöffnungen der Vliesschicht (i) zumindest teilweise überdeckt, und wobei die Fasern der ersten Vliesschicht (i) und die Membran (ii) im Kontaktbereich zumindest anteilig miteinander formschlüssig verbunden sind, indem die Polymerketten des ersten und des zweiten thermoplastischen Elastomers bei der Verbindung bzw. im Kontaktbereich zwischen Vliesschicht (i) und Membranschicht (ii) miteinander verschlungen werden bzw. sind, wobei die Verbindung bevorzugt auf (Kalt-)Verschweißen beruht, d.h. erste Vliesschicht (i) und Membran (ii) sind im Verbundstoff miteinander kalt-verschweißt.

Es konnte gezeigt werden, dass ein solcher Verbundstoff eine ausreichende Reißdehnung (vorzugsweise >200 %) aufweist. Die Wasserdampfdurchlässigkeit (WDD) bei 38 °C und 90% Luftfeuchtigkeit des Verbundstoffes beträgt gleichzeitig mindestens 1000g/m²*d, bestimmt gemäß DIN 53122-1 (August 2001), die Wasserdichtigkeit (LEP, bestimmt gemäß DIN EN 20811 (August 1992)) ist mindestens 0,5 bar. Der Verbundstoff weist eine gute Wasserdichtigkeit von mindestens 0,5 bar auf, ist aufgrund der Dünne der Membranschicht von weniger als 30 µm allerdings in der Lage, ausreichend Feuchtigkeit durch Absorption / Resorption zu transportieren. Besonders Verbundstoffe, in welchen Poren vorhanden sind, weisen aufgrund des Zusatzes von Additiven bei der Herstellung der Folien und der späteren Entfernung dieser Additive, besonders gute Werte bei der Wasserdampfdurchlässigkeit auf, wobei trotzdem die Wasserdichtigkeit ausreichend hoch ist. Zusammenfassend kann der Verbundstoff daher synonym auch als "Wasserdampf-permeabler Verbundstoff" bezeichnet werden.

Die Membranschicht (ii) ist erhalten oder erhältlich mittels
(1) Bereitstellen einer Lösung (L1) umfassend zumindest ein thermoplastisches Elastomer;
(2) Erzeugen einer Membran aus der Lösung (L1) mittels Phaseninversion.

Die Lösung (L1) umfasst weiterhin mindestens ein Additiv, ausgewählt aus der Gruppe bestehend aus Polytetrahydrofuran (PTHF) und Ammoniumverbindung, wobei (2) umfasst:
(2.a) Ausbilden eines Films aus der Lösung (L1);
(2.b) Erwärmen des gemäß (2.a) erhaltenen Films auf eine Temperatur ≥ 60 °C, bevorzugt im Bereich von 60 bis 130 °C, unter Erhalt eines porösen Films aufweisend Poren mit einem mittleren Porendurchmesser kleiner als 2000 nm, bestimmt mittels Hg-Porosimetrie gemäß DIN 66133,
wobei die Ammoniumverbindung bevorzugt ein oder mehrere Ammoniumverbindungen enthält, die unterhalb der Erweichungstemperatur des TPUs sich zersetzen und rückstandslos Poren hinterlassen, weiter bevorzugt ein oder mehrere Ammoniumverbindungen ausgewählt aus der Gruppe bestehend aus Ammoniumacetat [NH₄(O-C(=O)-CH₃)], Diammoniumcarbonat [(NH₄)₂CO₃] und Ammoniumhydrogencarbonat (Hirschhornsalz, NH₄HCO₃), weiter bevorzugt mindestens Ammoniumacetat.

Das als Additiv gegebenenfalls zugesetzte PTHF weist bevorzugt ein zahlenmittleres Molekulargewicht im Bereich von 500 bis 5000, bevorzugt im Bereich von 750 bis 2500 g/mol, weiter bevorzugt im Bereich von 800 bis 1200 g/mol auf und ist besonders bevorzugt PTHF1000. Hinsichtlich der Porenbildung bei Zusatz von PTHF als Additiv wird ohne Bindung an diese Theorie angenommen, dass PTHF nach Ausbildung des Films, bevorzugt in Abwesenheit von Lösemittel, von der Membran bzw. dem Vlies absorbiert wird und daher die Poren entstehen.

Bestimmte poröse Membranen sind in der WO 2019/072754 A1 beschrieben.

Das erste thermoplastische Elastomer der Vliesschicht (i) und das zweite thermoplastische Elastomer der Membranschicht (ii) sind unabhängig voneinander ausgewählt aus der Gruppe bestehend aus Polyurethan, Polyester, Polyetherester, Polyesterester, Polyamid, Polyetheramid, Polybutadienstyrol und Ethylenvinylacetat, wobei das erste thermoplastische Elastomer und das zweite thermoplastische Elastomer so ausgewählt sind, dass sie zueinander kompatibel sind, wobei bevorzugt das erste thermoplastische Elastomer und das zweite thermoplastische Elastomer beide ein, jeweils zueinander kompatibles, thermoplastisches Polyurethan (TPU) sind, wobei das TPU der Vliesschicht (i) gleich oder verschieden, bevorzugt gleich, zu dem TPU der Membranschicht (ii) ist. "Zueinander kompatibel" bedeutet, dass das erste und das zweite thermoplastische Polymer kompatibel in Bezug auf die chemische Verträglichkeit sind, wobei hier die Haftung der Membranschicht (ii) auf der Vliesschicht (i) (synonym: Trägerschicht) essentiell ist. Die gegebenenfalls noch lösungsmittelhaltige Membranschicht (ii) haftet auf der Trägerschicht durch Kaltverschweißung, d.h. es bildet sich ein formschlüssiger Verbund zwischen Vliesschicht (i) und Membranschicht (ii) aus, was nur bei Polymeren möglich ist, bei denen die Weichphasen zu mindestens 50 Gewichts-%, bevorzugt zu mindestens 60 Gewichts-%, weiter bevorzugt zu mindestens 65 Gewichts-% identische Komponenten aufweisen. Dies gilt insbesondere, wenn das thermoplastische Polymer einen Anteil der Weichphase von mindestens 50 Gewichts-% bezogen auf das Gesamtgewicht des thermoplastischen Polymers aufweist.Bevorzugt sind das erste thermoplastische Elastomer und das zweite thermoplastische Elastomer beide ein, jeweils zueinander kompatibles, thermoplastisches Polyurethan (TPU) (TPU1: TPU der Vliesschicht (i), TPU2: TPU der Membranschicht (ii)), gelten diese als zueinander kompatibel, wenn die Weichphasen von TPU1 und TPU2 zu mindestens 50 Gewichts-%, bevorzugt zu mindestens 70 Gewichts-%, weiter bevorzugt zu mindestens 80 Gewichts-% identische Komponenten aufweisen. Dies gilt insbesondere, wenn sowohl TPU1 als auch TPU2 einen Anteil der Weichphase von mindestens 50 Gewichts-% bezogen auf das Gesamtgewicht des jeweiligen TPUs aufweist.

Thermoplastisches Polyurethan (TPU) ist dem Fachmann bekannt. Bevorzugt basiert ein TPU auf den folgenden Komponenten:
- mindestens eine Verbindung (C1) aufweisend mindestens zwei gegenüber Isocyanat reaktiven Gruppen;
- mindestens ein Isocyanat (I1);
- mindestens ein Diol (D1).

Bevorzugt basiert ein eingesetztes TPU aufden folgenden Komponenten:
11 bis 79 Gewichts-%, bevorzugt 15 bis 75 Gewichts-%, weiter bevorzugt 20 bis 75 Gewichts-%, einer Mischung aus mindestens einem Diol (D1) und mindestens einem Isocyanat (I1),
- 21 bis 89 % Gewichts-%, bevorzugt 25 bis 85 Gewichts-%, weiter bevorzugt 25 bis 80 Gewichts-%, mindestens einer Verbindung (C1) aufweisend mindestens zwei gegenüber Isocyanat reaktiven Gruppen.

Bevorzugt, wenn das erste thermoplastische Elastomer und das zweite thermoplastische Elastomer des Vlies-Verbundstoffes beide ein, jeweils zueinander kompatibles, thermoplastisches Polyurethan (TPU) sind, d.h. das erste thermoplastische Elastomer ein TPU1 ist und das zweite thermoplastische Elastomer ein TPU2 ist, basieren sowohl TPU 1 als auch TPU2 auf den genannten Komponenten, weiter bevorzugt auf den genannten Komponenten in den genannten Mengen.

Das molare Verhältnis des mindestens einen Diols (D1) zum mindestens einen Isocyanat (I1) liegt üblicherweise im Bereich von 1:3 bis 3:1. Bevorzugt liegt das molare Verhältnis des mindestens einen Diols (D1) zum mindestens einen Isocyanat (I1) im Bereich von1:1 bis 1:2, bevorzugt im Bereich von 1:1,2 bis 1:1,8, weiter bevorzugt im Bereich von 1:1,4 bis 1:1,6.

Die mindestens eine Verbindung (C1) kann jedwede Verbindung mit mindestens zwei gegenüber Isocyanat reaktiven Gruppen sein. Bevorzugt sind die gegenüber Isocyanat reaktiven Gruppen Hydroxy- oder Amino-Gruppen. Die mindestens eine Verbindung (C1) kann zur Modifikation der Eigenschaften des TPUs zugesetzt werden. Jedwede Verbindung kann verwendet werden, solange sie geeignet ist, ein thermoplastisches Polyurethan, mit der Mischung aus dem mindestens einen Diol (D1) und dem mindestens einen Isocyanat (I1) zu ergeben. Beispielsweise kann die mindestens eine Verbindung (C1) ein Polyol sein, aber auch ein Polymer mit mindestens zwei Hydroxygruppen oder mindestens zwei Aminogruppen anders als ein Polyol, beispielsweise ein hydrophobes Polymer oder Oligomer umfassend Silizium. G Bevorzugt ist die mindestens eine Verbindung (C1) aufweisend mindestens zwei gegenüber Isocyanat reaktiven Gruppen ein Polyol. Polyole sind dem Fachmann bekannt und beispielsweise beschrieben in "Kunststoffhandbuch, 7, Polyurethane", Carl Hanser Verlag, 3. Auflage 1993, Sektion 3.1. Polyole welche bevorzugt eingesetzt werden sind polymere Verbindungen die Wasserstoffatome aufweisen, welche reaktiv gegenüber Isocyanaten sind. Hier sind alle geeigneten Polyole einsetzbar, beispielsweise Polyetherpolyole oder Polyesterpolyole oder Mischungen von zwei oder mehr davon, bevorzugt Polyetherdiole oder Polyesterdiole, oder Mischungen von zwei oder mehr davon. Geeignete Polyetherdiole sind beispielsweise Polyetherdiole basierend auf Tetrahydrofuran (THF), Ethylenoxid (EO) oder Propylenoxid (PO) oder deren Mischungen, beispielsweise Copolymere wie Blockcopolymere. Weiterhin kann jedes geeignete Polyesterdiol eingesetzt werden, wobei Polyesterdiol hier auch Polycarbonatdiole umfasst.

Bevorzugt umfassen das erste thermoplastische Elastomer und das zweite thermoplastische Elastomer beide jeweils ein TPU auf Basis mindestens eines Polyetherdiols, mindestens eines Polyesterdiols oder einer Mischung aus mindestens einem Polyetherdiol und mindestens einem Polyesterdiol als Verbindung (C1), weiter bevorzugt bestehen erstes thermoplastisches Elastomer und zweites thermoplastisches Elastomer beide jeweils aus einem TPU auf Basis mindestens eines Polyetherdiols, mindestens eines Polyesterdiols oder einer Mischung aus mindestens einem Polyetherdiol und mindestens einem Polyesterdiol als Verbindung (C1). Bevorzugt als Polyetherdiol sind polymere Verbindungen der Formel H-[-O-(CH₂)ₓ-]ₙ-OH, wobei x eine ganze Zahl im Bereich von 2 bis 10, bevorzugt im Bereich von 2 bis 4, ist; und n eine ganze Zahl im Bereich von 5 bis 100, bevorzugt im Bereich von 10 bis 40, ist. Besonders bevorzugte Polyetherdiole sind Polyethylenglykole (PEGs) mit zahlenmittleren Molekulargewichten im Bereich von 500 bis 5000 g/mol, bevorzugt im Bereich von 1000 bis 2000 g/mol oder Polytetrahydrofurane (PTHFs)mit zahlenmittleren Molekulargewichten im Bereich von 500 bis 5000 g/mol, bevorzugt im Bereich von 750 bis 2500 g/mol, weiter bevorzugt im Bereich von 1000 bis 2000 g/mol (PTHF1000 - PTHF2000). Bevorzugte Polyesterdiole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und Diolen mit 2 bis 12 Kohlenstoffatomen, vorzugsweise 2 bis 6 Kohlenstoffatomen, hergestellt werden, wobei in einer Ausführungsform ein Polyesterdiol auf Basis von Adipinsäure und 1,4-Butandiol eingesetzt wird. Polyesterdiole haben bevorzugt zahlenmittlere Molekulargewichte im Bereich von 500 bis 5000 g/mol, bevorzugt im Bereich von 1000 bis 4000 g/mol, weiter bevorzugt im Bereich von 2000 bis 3000 g/mol. In einer bevorzugten Variante umfassen das erste thermoplastische Elastomer und das zweite thermoplastische Elastomer beide jeweils ein TPU auf Basis mindestens eines Polyetherdiols als Verbindung (C1), weiter bevorzugt bestehen erstes thermoplastisches Elastomer und zweites thermoplastisches Elastomer beide jeweils aus einem TPU auf Basis mindestens eines Polyetherdiols als Verbindung (C1), wobei für das mindestens eine Polyetherdiol die voranstehend genannten Bevorzugungen gelten.

Das mindestens eine Isocyanat (I1) ist bevorzugt mindestens ein Polyisocyanat (I1). Als Polyisocyanat (I1) können aliphatische, cycloaliphatische, araliphatische und/oder aromatische Polyisocyanate, bevorzugt Diisocyanate, eingesetzt werden. Beispielhaft zu nennen sind die folgenden aromatischen Diisocyanate: 2,4-Toluol-diisocyanat, Mischungen aus 2,4- und 2,6-Toluoldiisocyanat, 4,4'-, 2,4'- und/oder 2,2'-Diphenylmethandiisocyanat (MDI), Mischungen aus 2,4'- und 4,4'-Diphenylmethandiisocyanat, urethan-modifiziertes flüssiges 4,4'- und/oder 2,4-Diphenylmethandiisocyanat, 4,4'-Diisocyanatodiphenylethan, Mischungen aus monomeren Methandiphenyldiisocyanaten und weiteren hoch polycyclischen Homologen von Methandiphenyldiisocyanat (polymeres MDI), 1,2- und 1,5-Naphthylendiisocyanat. Aliphatische Diisocyanate sind übliche aliphatische und/oder cycloaliphatische Diisocyanate, beispielsweise tri-, tetra-, penta-, hexa-, hepta- und/oder Octamethylendiisocyanat, 2-Methylpentamethylen-1,5-diisocyanat, 2-Ethylbutylen-1,4-diisocyanat, 1-Isocyanato-3,3,5-trimethyl-5-isocyanatomethylcyclohexan (Isophorondiisocyanat, IPDI), 1,4- und/oder 1,3-Bis(isocyanatomethyl)cyclohexan (HXDI), 1,4-Cyclohexandiisocyanat, 1-Methyl-2,4- und/oder -2,6-cyclohexandiisocyanat, 4,4'-, 2,4'- und/oder 2,2'-Dicyclohexylmethandiisocyanat (H12MDI). Gemäß einer Ausführungsform ist das mindestens eine Isocyanat (I1) ein Diisocyanat ausgewählt aus der Gruppe bestehend aus Diphenylmethandiisocyanat (MDI), Toluoldiisocyanat (TDI), und Hexamethylendiisocyanat (HDI), Dicyclohexylmethan-4,4'-diisocyanat (H12MDI), und umfasst bevorzugt mindestens MDI.

Das Polyisocyanat kann rein oder in Form einer Zusammensetzung, beispielsweise als Isocyanatprepolymer eingesetzt werden. Weiterhin kann eine Mischung umfassend Polyisocyanat und mindestens ein Lösungsmittel, eingesetzt werden, wobei geeignete Lösungsmittel dem Fachmann bekannt sind. Polyisocyanatprepolymere sind erhältlich mittels Reaktion der oben beschriebenen Polyisocyanate im Überschuss, beispielsweise bei Temperaturen im Bereich von 30 bis 100°C, bevorzugt bei mehr als 80°C, mit Polyolen unter Erhalt des Prepolymers. Für die Herstellung des Prepolymers werden bevorzugt Polyisocyanate und kommerziell erhältliche Polyole basierend auf Polyestern eingesetzt, ausgehend beispielsweise von Adipinsäure, oder auf Polyethern, ausgehend beispielsweise von Tetrahydrofuran, Ethylenoxid und/oder Propylenoxid. Polyole sind dem Fachmann bekannt und beispielsweise beschrieben in "Kunststoffhandbuch, 7, Polyurethane", Carl Hanser Verlag, 3. Auflage 1993, Sektion 3.1. Polyole welche bevorzugt eingesetzt werden sind polymere Verbindungen die Wasserstoffatome aufweisen, welche reaktiv gegenüber Isocyanaten sind. Besonders bevorzugte Polyole sind Polyetherpolyole. In der Herstellung der Polyisocyanatprepolymere können übliche Kettenverlängerer oder Vernetzungsmittel optional den Polyolen zugesetzt werden. Bevorzugte Kettenverlängerer sind Ethandiol, Butandiol, Hexandiol und Monoethylenglykol, weiter bevorzugt mindestens 1,4-Butandiol oder Monoethylenglykol. In diesem Fall ist das Verhältnis der organischen Polyisocyanate zu Polyolen und Kettenverlängerer vorzugsweise so gewählt, dass das Isocyanatprepolymer einen NCO-Gehalt im Bereich von 2 bis 30 Gewichts-%, weiter bevorzugt im Bereich von 6 bis 28 Gewichts-%, weiter bevorzugt im Bereich von 10 bis 24 Gewichts-%, aufweist.

Als Diol (D1), welches als Kettenverlängerer (K) fungiert, kann generell jedwedes Diol eingesetzt werden. Das Diol (D1) ist bevorzugt ausgewählt aus der Gruppe bestehend aus aliphatischen, araliphatischen, aromatischen, und/oder cycloaliphatischen Verbindungen mit einem Molgewicht im Bereich von 0,05 kg/mol bis 0,499 kg/mol, bevorzugt difunktionale Verbindungen, beispielsweise Diamine und/oder Alkandiole mit 2 bis 10 Kohlenstoffatomen im Alkylenteil, di-, tri-, tetra-, penta-, hexa-, hepta-, octa-, nona-, und/oder Decaalkylenglykole aufweisend von 3 bis 8 Kohlenstoffatome, insbesondere Ethylen-1,2-glykol, 1,3-Propandiol, 1,4-Butandiol, 1,6-Hexandiol, und bevorzugt korrespondierende oligo- und/oder Polypropylenglykole wie Diethylenglykol, Dipropylenglykol, 1,4-Cyclohexandiol, 1,4-Dimethanolcyclohexan, und Neopentylglykol, und es ist also möglich Mischungen zu verwenden. Bevorzugt weisen die Diole nur primäre Hydroxygruppen auf. In einer Ausführungsform werden als Diol (D1) bevorzugt 1,4-Butandiol, 1,3-Propandiol oder Mischungen aus 1,4-Butandiol, 1,3-Propandiol eingesetzt.

In der Herstellung des TPUs können weitere Verbindungen wie beispielsweise Katalysatoren, und/oder übliche Hilfsstoffe und/oder Additive eingesetzt werden. Übliche Hilfsstoffe sind beispielsweise oberflächenaktive Substanzen, Füllstoffe, Flammhemmer, Nukleirungsmittel, Oxidationsstabilisatoren, Schmiermittel und Mold-release-Hilfen, Farbstoffe, Pigmente und optional Stabilisatoren, beispielsweise zum Schutz gegen Hydrolyse, Licht, Hitze oder Entfärbung, anorganische und/oder organische Füllstoffe, Verstärkungsmittel und Weichmacher. Übliche Hilfsstoffe und Additive können beispielhaft dem "Kunststoffhandbuch" entnommen werden ("Kunststoffhandbuch"; 7, "Polyurethane", Carl Hanser Verlag, 1. Auflage 1966, Seiten 103-113).

Bevorzugt weisen die Fasern der Vliesschicht (i) des, mittels des erfindungsgemäßen Verfahrens erhaltenen oder erhältlichen Verbundstoffes, welcher allerdings nicht von der Erfindung umfasst ist, einen Durchmesser im Bereich von 0,01 bis 100 µm auf, bevorzugt im Bereich von 1 bis 50 µm, weiter bevorzugt im Bereich von 5 bis 30 µm, weiter bevorzugt im Bereich von 10 bis 30 µm. Bevorzugt weist die Vliesschicht (i) eine Maschenweite im Bereich von 20 bis 95 µm, bevorzugt im Bereich von 30 bis 90 µm, weiter bevorzugt im Bereich von 40 bis 80 µm, auf.

Bevorzugt weist der Verbundstoff, welcher mittels des erfindungsgemäßen Verfahrens erhalten oder erhältlich, aber nicht von der vorliegenden Erfindung umfasst ist, eine Wasserdichtigkeit (LEP) von mindestens 0,5 bar, bevorzugt mindestens 1 bar, auf. Bevorzugt weist der Verbundstoff eine Reißdehnung von mehr als 200 %, bevorzugt von mehr als 250 %, auf. Bevorzugt weist der Verbundstoff eine Wasserdampfdurchlässigkeit (WDD) bei 38 °C und 90 % Luftfeuchtigkeit von mindestens 1000g/m²*d, auf. Bevorzugt weist der Verbundstoff sowohl eine Wasserdichtigkeit (LEP) von mindestens 0,5 bar, bevorzugt mindestens 1 bar, auf, als auch gleichzeitig eine Reißdehnung von mehr als 200 %, bevorzugt von mehr als 250 %, sowie eine Wasserdampfdurchlässigkeit (WDD) bei 38 °C und 90 % Luftfeuchtigkeit von mindestens 1000g/m²*d.

Die Membranschicht (ii) wird im Schritt b) des Verfahrens zur Herstellung eines Verbundstoffes bevorzugt in einem Zustand bereitgestellt, in dem sie noch eine ausreichende Menge an Lösungsmittel enthält. Weiter bevorzugt weist die Membranschicht 5 - 80 Gewichts-%, bevorzugt 10 - 40 Gewichts-% an Lösungsmittel, bezogen auf das Gesamtgewicht von Membranschicht (ii) und darin enthaltenem Lösungsmittel, auf. Die Membranschicht (ii) wird auf der Vliesschicht (i) daher in Schritt c) bevorzugt in einem Zustand auf die Trägervliese aufgebracht, bei dem sie noch eine ausreichende Menge an Lösungsmittel beziehungsweise Haftung enthalten um mit dem Trägervlies kalt zu verschweißen und eine formschlüssige Verbindung einzugehen. Bei dem Lösungsmittel handelt es sich bevorzugt um das weiter unten bei der Herstellung der Membranschicht (ii) weiter im Detail beschriebene organische Lösungsmittel.

"Formschlüssiges Verbinden von (i) und (ii) mittels Kaltverschweißen" gemäß Schritt c) bedeutet, dass die noch lösungsmittelhaltige Membranschicht (ii) auf der Vliesschicht (i) durch Kaltverschweißung haftet, d.h. es bildet sich ein formschlüssiger Verbund zwischen Vliesschicht (i) und Membranschicht (ii) aus. Dabei bilden die Fasern der Vliesschicht (i) und die Membran (ii) im Kontaktbereich zumindest anteilig miteinander eine formschlüssige Verbindung, indem die Polymerketten des ersten und des zweiten thermoplastischen Elastomers bei der Verbindung bzw. im Kontaktbereich zwischen Vliesschicht (i) und Membranschicht (ii) miteinander verschlungen werden, d.h. aufgrund der Anwesenheit von Lösungsmittel erfolgt zunächst ein Anlösen der Vliesschicht (i) und/oder der Membranschicht (ii); anschließend härtet die Membranschicht (ii) auf der Vliesschicht (i) bei Entfernung des Lösungsmittels aus. Ein solches Kaltverschweißen gemäß Schritt c) erfolgt bevorzugt bei Temperaturen im Bereich von 10. bis 30°C und kann in kontinuierlich oder diskontinuierlich, frei oder in einer Pressvorrichtung erfolgen.

In einer Ausführungsform des Verfahrens zur Herstellung eines Verbundstoffes sind das erste thermoplastische Elastomer der gemäß (a) bereitgestellten Vliesschlicht (i) und das zweite thermoplastische Elastomer der gemäß (b) bereitgestellten Membranschicht (ii) unabhängig voneinander ausgewählt aus der Gruppe bestehend aus Polyurethan, Polyester, Polyetherester, Polyesterester, Polyamid, Polyetheramid, Polybutadienstyrol und Ethylenvinylacetat, wobei das erste thermoplastische Elastomer und das zweite thermoplastische Elastomer so ausgewählt sind, dass sie zueinander kompatibel sind, wobei bevorzugt das erste thermoplastische Elastomer und das zweite thermoplastische Elastomer beide ein, jeweils zueinander kompatibles, thermoplastisches Polyurethan (TPU) sind, wobei das erste TPU gleich oder verschieden, bevorzugt gleich, zu dem zweiten TPU ist.

In einer Ausführungsform des Verfahrens zur Herstellung eines Verbundstoffes weist die Membranschicht (ii) eine Schichtdicke von weniger als 30 µm auf, wobei die Membran entweder porenfrei (ii.1); oder porös ist und Poren mit einem mittleren Porendurchmesser kleiner als 2000 nm, bestimmt mittels Hg-Porosimetrie gemäß DIN 66133, aufweist (ii.2).

In einer Ausführungsform des Verfahrens zur Herstellung eines Verbundstoffes umfasst (b):
b.1) Bereitstellen einer Polymerlösung umfassend das zweite thermoplastische Elastomer, welches zu dem ersten thermoplastischen Elastomer der Vliesschicht (i) kompatibel ist;
b.2) Erzeugen einer Membranschicht (ii) aus der gemäß (b. 1) bereitgestellten Polymerlösung mittels Phaseninversion.

In einer Ausführungsform des Verfahrens zur Herstellung eines Verbundstoffes umfasst die gemäß (b) bereitgestellte Polymerlösung ein organisches Lösungsmittel mit einem log_{KOW} im Bereich von -1,5 bis +1, bevorzugt ausgewählt aus der Gruppe von Dimethylformamid (DMF, log_{KOW} -0.85), Tetrahydrofuran (THF, log_{Kow} 0.46). Dimethylsulfoxid (DMSO, log_{Kow} -1,35), N-Methyl-2-pyrrolidon (NMP, log_{KOW-} 0,46), Essigsäureethylester (Ethylacetat, log_{KOW}0,73), Methylethylketon (MEK, log_{KOW}0,29), Ethylethylketon (EEK, log_{KOW}0,99) und Mischungen von zwei oder mehr dieser organischen Lösungsmittel. weiter bevorzugt ausgewählt aus der Gruppe von DMF, THF und Mischungen von DMF und THF. In einer Ausführungsform des Verfahrens zur Herstellung eines Verbundstoffes weist die gemäß (b) bereitgestellte Polymerlösung eine Polymerkonzentration im Bereich von 3-50 Gewichts-%, bevorzugt im Bereich von 5-30 Gewichts-%, weiter bevorzugt im Bereich von 10-20 Gewichts-% auf, insbesondere wenn das zweite thermoplastische Elastomer ein TPU ist, jeweils bezogen auf das Gesamtgewicht der Polymerlösung von 100 Gewichts-%.

In einer Ausführungsform des Verfahrens zur Herstellung eines Verbundstoffes umfasst die Polymerlösung weiterhin mindestens ein Additiv, ausgewählt aus der Gruppe bestehend aus Polytetrahydrofuran und einer Ammoniumverbindung, und optional Wasser, wobei (b.2) bevorzugt umfasst:
(b.2.a) Ausbilden eines Films aus der Polymerlösung;
(b.2.b) Erwärmen des gemäß (b.2.a) erhaltenen Films auf eine Temperatur ≥ 60 °C, bevorzugt auf eine Temperatur im Bereich von ≥ 60 °C bis 130°C, unter Erhalt einer porösen Membranschicht (ii.2) aufweisend Poren mit einem mittleren Porendurchmesser kleiner als 2000 nm, bestimmt mittels Hg-Porosimetrie gemäß DIN 66133.

In einer Ausführungsform des Verfahrens zur Herstellung eines Verbundstoffes umfasst die Polymerlösung das mindestens eine weitere Additiv in einem gewichtsbasierten Mischungsverhältnis zweites thermoplastisches Elastomer: Additiv von 1:10 bis 10:1, bevorzugt 1:5 bis 5:1.

In einer Ausführungsform des Verfahrens zur Herstellung eines Verbundstoffes weisen die Fasern der gemäß (a) bereitgestellten Vliesschicht (i) einen Durchmesser im Bereich von 0,01 bis 100 µm, bevorzugt im Bereich von 1 bis 50 µm, weiter bevorzugt im Bereich von 5 bis 30 µm, weiter bevorzugt im Bereich von 10 bis 30 µm, auf.

In einer Ausführungsform des Verfahrens zur Herstellung eines Verbundstoffes weist die gemäß (a) bereitgestellte Vliesschicht (i) eine Maschenweite im Bereich von 20 bis 95 µm, bevorzugt im Bereich von 30 bis 90 µm, weiter bevorzugt im Bereich von 40 bis 80 µm, auf.

Die Erfindung betrifft weiterhin einen Verbundstoff, erhalten oder erhältlich nach dem voranstehend beschriebenen Verfahren.

Die Erfindung betrifft ebenfalls die Verwendung eines Vliesverbundstoffes erhalten oder erhältlich nach dem voranstehend beschriebenen Verfahren für die Herstellung eines Funktionsartikels, wobei der Funktionsartikel bevorzugt ausgewählt ist aus der Gruppe bestehend aus Funktionsbekleidungsstück, insbesondere Jacke, Hose, Pulli, Weste, Kapuzenshirt, Overall, Cape, Poncho, Mantel, Mütze oder Hut, bevorzugt für Sportbekleidung wie Golf- Ski, Wander-, Lauf-, Joggingbekleidung, Funktionsschuh, Funktionsgegenstand, insbesondere Tasche, Rucksack oder Zelt; Badebekleidungsstück, insbesondere Badeanzug, Tankini, Bikini, Badehose, Badeschuh oder Badekappe; Bekleidung für Wassersport, insbesondere Segelbekleidung, Surfbekleidung oder Kitesurfbekleidung, bevorzugt Surfbekleidung oder Kitesurfbekleidung, bevorzugt Funktionsbekleidungsstück.

Die Erfindung wird nachfolgend anhand von Beispielen näher erläutert, ohne sie darauf zu beschränken.

### Beispiele

### 1. Chemikalien

**Tabelle 1**

| Eingesetzte Chemikalien | | |
|---|---|---|
| Abkürzung | Bezeichnung | Chemische Zusammensetzung |
| Iso1 | Isocyanat 1 | 4.4' -Diisocyanatodiphenylmethan |
| Poly 1 | Polyol 1 | Polytetrahydrofuran, Mn⁾: ~2000 g/mol, mit einer OH Zahl von 56 (PTHF2000); Schmelzpunkt 36 °C |
| Poly2 | Polyol 2 | Polytetrahydrofuran, Mn⁾: ~1000 g/mol, mit einer OH Zahl von 112 (PTHF1000); Schmelzpunkt im Bereich von 23 bis 28 °C |
| Poly3 | Polyol 3 | Polyethylenglykol Mn¹⁾: ~1500g/mol mit einer OH Zahl von 75 |
| Poly4 | Polyol 4 | Polyesterdiol auf der Basis von Adipinsäure und 1,4-Butandiol Mn ) ~2440 g/mol |
| KV1 | Kettenverlängerer 1 | 1,4-Butandiol |
| KV2 | Kettenverlängerer 2 | 1.3-Propandiol |
| Weich 1 | Weichmacher 1 | Acetvltributvlcitrat |
| Stab 1 | Stabilisator 1 (Antioxidationsmittel) | sterisch gehindertes Phenol |
| Stab2 | Stabilisator 2 (Hvdrolvsestabilisator) | Polymeres Carbodiimid |
| UV1 | UV Stabilisator | Benztriazolderivate |

| Abkürzung | Bezeichnung | Chemische Zusammensetzung |
|---|---|---|
| Wachs 1 | Gleitmittel 1 | Bisstearvlamid |
| Wachs2 | Gleitmittel 2 | Esterwachs |

| | | |
|---|---|---|
| ) Mn ist das zahlenmittlere Molekulargewicht | | |

### 2. Meßmethoden

Härte: DIN ISO 7619-1 (Februar 2012)
Zugfestigkeit, Reißdehnung und Spannung: DIN 53504 (März 2017)
Spannungswert: DIN 53504-S2 (März 2017)
Weiterreißwiderstand: DIN ISO 34-1, B (b) (September 2016)
Dichte: DIN EN ISO 1183-1 A (April 2013)
Foliendicke: bestimmt mittels Mikrometerschraube oder Rasterelektronemikroskopie (REM), bevorzugt mittels REM
Wasserdampfdurchlässigkeit (WDD): DIN 53122-1 (August 2001) bei 38 °C und 90 % Luftfeuchtigkeit und bei 23 °C und 85 % Luftfeuchtigkeit

Die Wasserdampfpermeabilitäten (water vapour permeability, WDD) wurde mit einem Cup-Verfahren bei 38 °C und 90 % relativer Feuchtigkeit, sowie bei 23 °C und 85 % relativer Feuchtigkeit gemäß DIN 53122-1 (August 2001) bestimmt. Für eine bestimmte Membrandicke wurden absolute WDD-Werte bestimmt. Hohe WDD-Werte waren erwünscht und erlaubten hohe Flussraten des Wasserdampfes.
Wasserdichtigkeit (LEP): DIN EN 20811 (August 1992)
Der Flüssigkeitseintrittsdruck (LEP) der Membranen wurde gemäß
DIN EN 20811 - (August 1992)unter Verwendung einer Druckzelle mit einem Durchmesser von 60 mm mit ultrareinem Wasser (salzfreies Wasser, gefiltert durch ein Millipore UF-System) bis zu 4,0 bar (40 000 mm Wassersäule) bestimmt. Der Flüssigkeitseintrittsdruck LEP ist definiert als der Druck, bei welchem das flüssige Wasser beginnt, die Membran zu permeieren. Ein hoher LEP erlaubt es der Membran, einer hohen Wassersäule (flüssig) standzuhalten.
Porendurchmesser: Hg-Porosimetrie gemäß DIN 66133 (Juni 1993)

### 3. Allgemeine Verfahrensvorschrift zur Herstellung der thermoplastischen Polyurethane (TPUs)

Die Polyole wurden unter Rühren mit dem Kettenverlängerer versetzt. Nach anschließender Erwärmung der Lösung auf 80 °C wurden das Isocyanat sowie gegebenenfalls die in den Rezepturen aufgeführten Additive zugegeben und so lange gerührt, bis die Lösung homogen war. Die Reaktionsmischung erhitzte sich und wurde dann auf einen beheizten, teflonbeschichteten Tisch ausgegossen. Die Gießschwarte wurde 15h bei 80°C getempert. Das so hergestellte Material wurde in einer Mühle zu einem schüttfähigen Granulat zerkleinert, erneut getrocknet und in Aluminium beschichtete PE-Beutel zur weiteren Verwendung gefüllt.

### Extrusion:

Zur Homogenisierung der hergestellten Proben wurden diese auf einem Zweiwellenextruder zu Zylindergranulat verarbeitet.

Die Extrusion erfolgte auf einem Doppelschneckenextruder mit 19mm Schneckendurchmesser, der einen Strangdurchmesser von ca. 2 mm lieferte.

**Tabelle 2**

| Extrusionsdaten | |
|---|---|
| Extruder: | gleichläufiger Doppelschneckenextruder, APV MP19 |
| Temperaturprofil: | HZ1 170 °C bis 220 °C |
| | HZ2 180 °C bis 230 °C |
| | HZ3 190 °C bis 230 °C |
| | HZ4 210 °C bis 240 °C |
| | HZ5 (Düse) 200 °C bis 240 °C |
| Schneckendrehzahl: | 100 U/min |
| Druck: | ca. 10 bis 30 bar |
| Strangkühlung: | Wasserbad (10 °C) |

Das Temperaturprofil wurde abhängig von der Erweichungstemperatur des Polymeren gewählt.

### 4. Herstellung thermoplastischer Polyurethane

Aus den Ausgangsmaterialien wurden die in Tab. 1 ersichtlichen thermoplastischen Polyurethane TPU 1 bis 7 gemäß der allgemeinen Vorschrift aus 3. hergestellt.

**Tabelle 3**

| Zusammensetzung der TPUs 1 bis 7 | | | | | | | |
|---|---|---|---|---|---|---|---|
| | TPU 1 (Gew.-%) | TPU 2 (Gew.-%) | TPU3 (Gew.-%) | TPU 4 (Gew.-%) | TPU 5 (Gew.-%) | TPU6 (Gew.-%) | TPU7 (Gew.-%) |
| Polv1 | 34,24 | | | | | | |
| Polv2 | 34.24 | | 55.61 | | 61.22 | 48.56 | |
| Polv3 | | 51,96 | | 45,57 | | | |
| Polv4 | | | | | | | 57.75 |
| Iso1 | 25.47 | 37,41 | 35,04 | 41,92 | 31,84 | 40,30 | 32,16 |
| KV1 | 4,52 | 9,09 | 7,60 | 12,06 | 5,94 | 10,14 | 9,22 |
| KV2 | | 1,10 | | | | | |
| Stab1 | 1,00 | 0.30 | 1,00 | 0,30 | 1,00 | 1,00 | |
| Stab2 | | | | | | | |
| UV1 | 0,50 | | 0,35 | | | | |
| Wachs1 | | | 0,05 | | 0,05 | | 0,04 |
| Wachs2 | | 0,15 | | 0,15 | | | |

### 5. Bestimmung der mechanischen Eigenschaften der TPUs

Die mechanischen Eigenschaften der erzeugten TPUs, gemessen an Spritzgussplatten aus den gemäß Sektion 4 hergestellten TPUs, ergeben sich aus Tabelle 4.

**Tabelle 4**

| mechanische Eigenschaften der erzeugten TPUs | | | | | | | | |
|---|---|---|---|---|---|---|---|---|
| TPU | | TPU1 | TPU2 | TPU3 | TPU4 | TPU5 | TPU6 | TPU7 |
| Dichte | [g/cm³] | 1,08 | 1,21 | 1,12 | 1,22 | 1,11 | 1,15 | 1,21 |
| Härte | [Shore A] | 72 | 85 | 87 | 90 | 80 | 96 | 91 |
| Abrieb | [mm³] | 33 | 67 | 34 | 69 | 68 | 28 | 37 |
| Zugfestigkeit | [MPa] | 36 | 35 | 46 | 44 | 46 | 54 | 51 |
| Reißdehnung | [%] | 700 | 890 | 600 | 690 | 800 | 530 | 590 |
| Weiterreißwiderstand | [N/mm] | 45 | 46 | 75 | 65 | 63 | 102 | 99 |

### 6. Herstellung der Träger-Vliese (Vliesschicht (i))

Aus TPU3 und TPU6 wurden auf einer Meltblown Technikumsanlage Spinvliese mit einem Flächengewicht von 50 und 90 g/m³ hergestellt. Hierzu wurde das jeweilige TPU in einem Zweiwellenextruder ausgeschmolzen, mittels einer Schmelzepumpe kontinuierlich in den Spinnkopf gefördert und auf einem drunter laufenden Förderband, dass mit einem Trennvlies aus Polypropylen belegt war, abgelegt. Das Trennvlies hatte nur die Funktion eines Separators, um ein Verkleben des TPU-Vlieses mit der Unterlage zu verhindern und ein einfaches Auf- und Abrollen der hergestellten TPU-Vliese zu gewährleisten. Die TPU Fasern innerhalb des hergestellten Vlieses waren fest miteinander verschweißt und ließen sich nicht voneinander trennen.

**Tabelle 5**

| TPU Vliese | | | | | | |
|---|---|---|---|---|---|---|
| Vlies [Vliesschicht (i)] | | Vlies 1 TPU3 | Vlies 2 TPU3 | Vlies 3 TPU6 | Vlies 4 TPU6 | Vlies 5 TPU7 |
| Flächengewicht | [g/m³] | 50 | 90 | 50 | 90 | 100 |
| Durchschnittliche Faserstärke | [µm] | 20 | 20 | 20 | 25 | 25 |
| Reißdehnung | [%] | 420 | 480 | 280 | 360 | 310 |
| Maschenweite (geschätzter Mittelwert aus Rasterelektronenmikroskopie (REM) Aufnahme) | [µm] | 80 | 40 | 80 | 40 | 40 |

### 7. Herstellung der ultradünnen Membranen / Herstellung der Verbundstoffe

### 7.1 Herstellung von Polymer-Lösungen aus TPU1, TPU2, TPU4, TPU5

Aus den TPU's 1,2,4,5 wurde jeweils eine 10 - 20 Gewichts-% tige Lösung in THF (Tertrahydrofuran) hergestellt. Hierzu wurden 100 g bzw. 200 g des jeweiligen TPU, sowie 800 ml THF in ein 1500 ml Rollglas gegeben. Das Rollglas wurde 10 h kontinuierlich auf einer Rollanlage bewegt bis sich alles TPU aufgelöst hatte. Die TPU Lösung wurde anschließend durch einen 20 µm Filter gezogen und in ein Weithalsglas mit THF-dichtem Deckel verpackt.

### 7.2 Herstellung der ultradünnen Membranen

Die aus 7.1 erhaltenen Polymerlösungen wurden in einer Labor-Filmziehanlage mittels Rakel zu dünnen TPU Filmen verarbeitet, die anschließend auf die Trägervliese übertragen wurden. Um die Wasserdampfdurchlässigkeit weiter zu verbessern wurde den TPU Lösungen in einigen Fällen Ammoniumacetatlösung (NH₄ac) in einem Mischungsverhältnis TPU:H₂O:Ammoniumacetat = 1: 1: 1 zugesetzt und intensiv vermischt. In einem anderen Fall (Folie 8) wurde PTHF1000 als Reinsubstanz der Lösung im Verhältnis TPU:PTHF1000 = 3:1 zugegeben. Die Ammoniumacetat enthaltenden Filme wurden nach dem Transfer auf die Trägervliese 4 Stunden bei 100 °C gelagert um das Ammoniumactetat zu zersetzten, um damit wiederum die Porosität und die Wasserdampfdurchlässigkeit zu erhöhen. Folie 8 wurde bei einer Temperatur von 60 °C für 10 Stunden gelagert. Die eingesetzten TPUs und Konzentrationen sind aus der nachstehenden Tabelle 6 ersichtlich.

**Tabelle 6**

| Eingesetzte TPUs und Konzentrationen | | | | | | |
|---|---|---|---|---|---|---|
| Ultradünne Folie | | Folie 1 | Folie2 | Folie3 | Folie4 | Folie5 |
| TPU | | TPU1 | TPU2 | TPU2 | TPU2 | TPU2 |
| Konzentration TPU in THF Lösung | Gewichts-% | 10 | 10 | 20 | 20 | 10 |
| Zusatz Poly1 (PTHF1000) zur TPU/THF-Lösung | Gewichts-% | | | | | |
| Zusatz NH₄ac zur TPU/THF-Lösung | Gewichts-% | | | | 20 | 10 |
| Zusatz H₂O zur TPU/THF-Lösung | Gewichts-% | | | | 20 | 10 |
| Foliendicke | [µm] | 18 | 20 | 25 | 25 | 20 |

| Fortsetzung Tabelle 6 | | | | | | |
|---|---|---|---|---|---|---|
| Ultradünne Folie | | Folie6 | Folie7 | Folie8 | Folie9 | Folie 10 |
| TPU | | TPU1 | TPU4 | TPU5 | TPU5 | TPU5 |
| Konzentration TPU in THF Lösung | Gewichts-% | 10 | 10 | 10 | 20 | 10 |
| Zusatz Poly1 (PTHF1000) zur TPU/THF-Lösung | Gewichts-% | | | 3,3 | | |
| Zusatz NH₄ac zur TPU/THF-Lösung | Gewichts-% | 10 | | | 20 | 10 |
| Zusatz H₂O zur TPU/THF-Lösung | Gewichts-% | 10 | | | 20 | 10 |
| Foliendicke | [µm] | 20 | 10 | 10 | 25 | 20 |

### 7.3 Verbundstoff-Herstellung aus ultradünner Folie/Membran und Trägervlies

Die ultradünnen Folien wurden in einem Zustand auf die Trägervliese übertragen bei dem sie noch eine ausreichende Menge an Lösungsmittel beziehungsweise Haftung enthielten um mit dem Trägervlies kalt zu verschweißen und eine formschlüssige Verbindung einzugehen. Eine mechanische Trennung von Vlies und (Membran)folie war nach kurzer Lagerung des Verbundstoffes nicht mehr zerstörungsfrei möglich. Mikroskopische Aufnahmen zeigten, dass die Faserstruktur des Vlieses bei der Übertragung erhalten bleibt und die Maschenfenster des Trägervlieses durch die (Membran)folie geschlossen werden.

Die Eigenschaften der erfindungsgemäß hergestellten Verbundstoffe in Anlehnung an die DIN Normen ergeben sich aus Tab. 7:

**Tabelle 7**

| Eigenschaften der Verbundstoffe | | | | | |
|---|---|---|---|---|---|
| Ultradünne Folie | | Folie 1 | Folie6 | Folie6 | Folie6 |
| Trägervlies | | Vlies 1 | Vlies 1 | Vlies 1 | Vlies 2 |
| Temperung | 100°C/ 4h | | | x | x |
| Wasserdichtigkeit (LEP) | [bar] | >1 | 3,5 | 0,5 | 0,5 |
| Wasserdampfdurchlässigkeit (WDD) 38 °C/90 % rel. Feuchte | [g/m²*d] | 1590 | 2440 | 3080 | 2950 |
| Wasserdampfdurchlässigkeit (WDD) 23 °C/90% rel. Feuchte | [g/m²*d] | 540 | 975 | 1470 | 1370 |
| Reißdehnung | [%] | >400 | >400 | >400 | <400 |

| Fortsetzung Tabelle 7 | | | | | | |
|---|---|---|---|---|---|---|
| Ultradünne Folie | | Folie2 | Folie4 | Folie4 | Folie7 | Folie1 |
| Trägervlies | | Vlies 2 | Vlies 2 | Vlies 2 | Vlies 5 | Vlies 5 |
| Temperung | 100°C/ 4h | | x | x | | |
| Wasserdichtigkeit (LEP) | [bar] | 1 | 0,5 | 0,5 | >0,5 | >1 |
| Wasserdampfdurchlässigkeit (WDD) 38 °C/90 % rel. Feuchte | [g/m²*d] | 2240 | 2490 | 2605 | 1560 | 1470 |
| Wasserdampfdurchlässigkeit (WDD) 23 °C/90% rel. Feuchte | [g/m²*d] | 905 | 1050 | 1010 | 600 | 510 |
| Reißdehnung | [%] | >450 | >400 | >450 | >250 | >250 |

Wie aus den Messwerten ersichtlich, zeigten alle Verbundstoffe eine ausreichende Reißdehnung (vorzugsweise >200 %). Die Wasserdampfdurchlässigkeit (WDD) bei 38 °C und 90% Luftfeuchtigkeit betrug bei allen Verbundstoffen mindestens 1000g/m²*d, bestimmt gemäß DIN 53122-1 (August 2001). Die Wasserdichtigkeit (LEP) war jeweils mindestens 0,5 bar, bestimmt gemäß DIN EN 20811 (August 1992).

Es ist ersichtlich, dass der Verbundstoff eine gute Wasserdichtigkeit von mindestens 0,5 bar aufweist, aufgrund der Dünne der Membranschicht von weniger als 30 µm allerdings in der Lage ist, ausreichend Feuchtigkeit durch Absorption / Resorption zu transportieren. Besonders war zu bemerken, dass die Verbundstoffe, in welchen Poren vorhanden waren (siehe Verbundstoffe basierend auf den Folien 4 bzw. 6), aufgrund des Zusatzes von Additiven bei der Herstellung der Folien und der späteren Entfernung dieser Additive, besonders gute Werte bei der Wasserdampfdurchlässigkeit aufweisen, wobei trotzdem die Wasserdichtigkeit ausreichend hoch blieb.

### Angeführte Literatur

EP 2 077 733 81
US 2010/0028553 A1
WO 2012/111930 A2
KR 2017120821 A
KR 2017120807 A
KR 2017120818 A
EP 19168078.4 (unveröffentlicht, Anmeldetag 9. April 2019)
WO 2019/072754 A1
"Kunststoffhandbuch, 7, Polyurethane", Carl Hanser Verlag, 3. Auflage 1993, Sektion 3.1. "Kunststoffhandbuch"; 7, "Polyurethane", Carl Hanser Verlag, 1. Auflage 1966, Seiten 103-11 WO 2008/087087 A1

## Patentansprüche

1. Verfahren zur Herstellung eines Verbundstoffes umfassend:
a) Bereitstellen einer Vliesschicht (i) umfassend Fasern aus einem ersten thermoplastischen Polyurethan und aufweisend Maschen mit einer Maschenweite im Bereich von 10 bis 100 µm, bestimmt mittels Rasterelektronenmikroskopie;
b) Bereitstellen einer Membranschicht (ii) umfassend ein zweites thermoplastisches Polyurethan, welches zu dem ersten thermoplastischen Polyurethan der Vliesschicht (i) kompatibel ist, wobei die Membranschicht porös ist und Poren mit einem mittleren Porendurchmesser kleiner als 2000 nm, bestimmt mittels Hg-Porosimetrie gemäß DIN 66133, aufweist (ii.2);
c) Aufbringen der Membranschicht (ii) auf der Vliesschicht (i) und formschlüssiges Verbinden von (i) und (ii) mittels Kaltverschweißen;
unter Erhalt eines Verbundstoffes; wobei
Kaltverschweißen gemäß (c) bedeutet, dass die Fasern der Vliesschicht (i) und die Membran (ii) im Kontaktbereich zumindest anteilig miteinander eine formschlüssige Verbindung ausbilden, wobei aufgrund der Anwesenheit von Lösungsmittel zunächst ein Anlösen der Vliesschicht (i) und/oder der Membranschicht (ii) und anschließend ein Aushärten der Membranschicht (ii) auf der Vliesschicht (i) bei Entfernung des Lösungsmittels erfolgt.

2. Verfahren zur Herstellung eines Verbundstoffes nach Anspruch 1, wobei das das erste TPU gleich oder verschieden, bevorzugt gleich, zu dem zweiten TPU ist.

3. Verfahren zur Herstellung eines Verbundstoffes nach Anspruch 1 oder 2, wobei die Membranschicht (ii) eine Schichtdicke von weniger als 30 µm, bestimmt mittels Rasterelektronenmikroskopie, aufweist.

4. Verfahren zur Herstellung eines Verbundstoffes nach einem der Ansprüche 1 bis 3, wobei (b) umfasst:
b.1) Bereitstellen einer Polymerlösung umfassend das zweite thermoplastische Polyurethan, welches zu dem ersten thermoplastischen Polyurethan der Vliesschicht (i) kompatibel ist;
b.2) Erzeugen einer Membranschicht (ii) aus der gemäß (b.1) bereitgestellten Polymerlösung mittels Phaseninversion.

5. Verfahren zur Herstellung eines Verbundstoffes nach einem der Ansprüche 1 bis 4, wobei die Polymerlösung weiterhin mindestens ein Additiv, ausgewählt aus der Gruppe bestehend aus Polytetrahydrofuran und Ammoniumverbindung, und optional Wasser umfasst, wobei (b.2) gemäß Anspruch 4 umfasst:
(b.2.a) Ausbilden eines Films aus der Polymerlösung;
(b.2.b) Erwärmen des gemäß (b.2.a) erhaltenen Films auf eine Temperatur ≥ 60 °C, bevorzugt auf eine Temperatur im Bereich von ≥ 60 °C bis 130°C, unter Erhalt einer porösen Membranschicht (ii.2) aufweisend Poren mit einem mittleren Porendurchmesser kleiner als 2000 nm, bestimmt mittels Hg-Porosimetrie gemäß DIN 66133;
wobei die Polymerlösung das mindestens eine weitere Additiv bevorzugt in einem gewichtsbasierten Mischungsverhältnis zweites thermoplastisches Polyurethan:Additiv von 1:10 bis 10:1, bevorzugt 1:5 bis 5:1, umfasst.

6. Verfahren zur Herstellung eines Verbundstoffes nach einem der Ansprüche 1 bis 5, wobei die Fasern der gemäß (a) bereitgestellten Vliesschicht (i) einen Durchmesser im Bereich von 0,01 bis 100 µm, bevorzugt im Bereich von 1 bis 50 µm, weiter bevorzugt im Bereich von 5 bis 30 µm, weiter bevorzugt im Bereich von 10 bis 30 µm, jeweils bestimmt mittels Rasterelektronenmikroskopie, aufweisen;
und/oder
wobei die gemäß (a) bereitgestellte Vliesschicht (i) eine Maschenweite im Bereich von 20 bis 95 µm, bevorzugt im Bereich von 30 bis 90 µm, weiter bevorzugt im Bereich von 40 bis 80 µm, jeweils bestimmt mittels Rasterelektronenmikroskopie, aufweist.

7. Verbundstoff, erhalten oder erhältlich nach dem Verfahren gemäß einem der Ansprüche 1 bis 6.

8. Verwendung eines Vliesverbundstoffes erhalten oder erhältlich nach dem Verfahren gemäß einem der Ansprüche 1 bis 6 für die Herstellung eines Funktionsartikels, wobei der Funktionsartikel bevorzugt ausgewählt ist aus der Gruppe bestehend aus Funktionsbekleidungsstück, insbesondere Jacke, Hose, Pulli, Weste, Kapuzenshirt, Overall, Cape, Poncho, Mantel, Mütze oder Hut, bevorzugt für Sportbekleidung wie Golf- Ski, Wander-, Lauf-, Joggingbekleidung, Funktionsschuh, Funktionsgegenstand, insbesondere Tasche, Rucksack oder Zelt; Badebekleidungsstück, insbesondere Badeanzug, Tankini, Bikini, Badehose, Badeschuh oder Badekappe; Bekleidung für Wassersport, insbesondere Segelbekleidung, Surfbekleidung oder Kitesurfbekleidung, bevorzugt Surfbekleidung oder Kitesurfbekleidung, bevorzugt Funktionsbekleidungsstück.

## Claims

1. A process for producing a composite material, comprising:
a) providing a nonwoven layer (i) comprising fibers formed from a first thermoplastic polyurethane and having meshes with a mesh size in the range from 10 to 100 µm, determined by means of scanning electron microscopy;
b) providing a membrane layer (ii) comprising a second thermoplastic polyurethane which is compatible with the first thermoplastic polyurethane of the nonwoven layer (i), wherein the membrane layer is porous and has pores with an average pore diameter of less than 2000 nm, determined by means of Hg porosimetry in accordance with DIN 66133, (ii.2);
c) applying the membrane layer (ii) to the nonwoven layer (i) and joining (i) and (ii) in an interlocking manner by means of cold welding;
to obtain a composite material; where
cold welding according to (c) means that the fibers of the nonwoven layer (i) and the membrane (ii) in the contact area at least partly form an interlocking join with one another, where on account of the presence of solvent firstly the nonwoven layer (i) and/or the membrane layer (ii) partly dissolve, and then the membrane layer (ii) hardens on the nonwoven layer (i) when the solvent is removed.

2. The process for producing a composite material according to claim 1, wherein the first TPU is identical to or different from, preferably identical to, the second TPU.

3. The process for producing a composite material according to claim 1 or 2, wherein the membrane layer (ii) has a layer thickness of less than 30 µm, determined by means of scanning electron microscopy.

4. The process for producing a composite material according to any of claims 1 to 3, wherein (b) comprises:
b.1) providing a polymer solution comprising the second thermoplastic polyurethane, which is compatible with the first thermoplastic polyurethane of the nonwoven layer (i);
b.2) creating a membrane layer (ii) from the polymer solution provided according to (b.1) by means of phase inversion.

5. The process for producing a composite material according to any of claims 1 to 4, wherein the polymer solution further comprises at least one additive selected from the group consisting of polytetrahydrofuran and ammonium compound, and optionally water, wherein (b.2) according to claim 4 comprises:
(b.2.a) forming a film from the polymer solution;
(b.2.b) heating the film obtained according to (b.2.a) to a temperature of ≥ 60°C, preferably to a temperature in the range from ≥ 60°C to 130°C, to obtain a porous membrane layer (ii.2) having pores with an average pore diameter of less than 2000 nm, determined by means of Hg porosimetry in accordance with DIN 66133;
wherein the polymer solution comprises the at least one further additive preferably in a weight-based mixing ratio of second thermoplastic polyurethane:additive of 1:10 to 10:1, preferably 1:5 to 5:1.

6. The process for producing a composite material according to any of claims 1 to 5, wherein the fibers of the nonwoven layer (i) provided according to (a) have a diameter in the range from 0.01 to 100 µm, preferably in the range from 1 to 50 µm, more preferably in the range from 5 to 30 µm, more preferably in the range from 10 to 30 µm, determined in each case by means of scanning electron microscopy;
and/or
wherein the nonwoven layer (i) provided according to (a) has a mesh size in the range from 20 to 95 µm, preferably in the range from 30 to 90 µm, more preferably in the range from 40 to 80 µm, determined in each case by means of scanning electron microscopy.

7. A composite material obtained or obtainable by the process according to any of claims 1 to 6.

8. The use of a nonwoven composite material obtained or obtainable by the process according to any of claims 1 to 6 for the production of a functional article, the functional article preferably being selected from the group consisting of an item of functional clothing, in particular jacket, trousers, sweater, vest, hooded shirt, overalls, cape, poncho, coat, cap or hat, preferably for sportswear such as golf, ski, hiking, running, and jogging wear, functional shoe, a functional item, in particular bag, rucksack or tent; an item of swimwear, in particular swimsuit, tankini, bikini, swimming trunks, bathing shoe or bathing cap; clothing for water sports, in particular sailing wear, surf wear or kitesurf wear, preferably surf wear or kitesurf wear, preferably an item of functional clothing.

## Revendications

1. Procédé pour la fabrication d'un matériau composite, comprenant :
a) la mise à disposition d'une couche de non-tissé (i) comprenant des fibres en un premier polyuréthane thermoplastique et présentant des mailles d'une largeur de maille dans la plage de 10 à 100 µm, déterminée par microscopie électronique à balayage ;
b) la mise à disposition d'une couche membranaire (ii) comprenant un deuxième polyuréthane thermoplastique, qui est compatible avec le premier polyuréthane thermoplastique de la couche de non-tissé (i), la couche membranaire étant poreuse et présentant des pores d'un diamètre moyen de pore inférieur à 2000 nm, déterminé par porosimétrie au Hg selon la norme DIN 66133, (ii.2) ;
c) l'application de la couche membranaire (ii) sur la couche de non-tissé (i) et assemblage par complémentarité de forme de (i) et de (ii) par soudage à froid ;
avec obtention d'un matériau composite ;
le soudage à froid selon (c) signifiant que les fibres de la couche de non-tissé (i) et la membrane (ii) forment, dans la zone de contact, au moins en partie, l'une avec l'autre, un assemblage par complémentarité de forme, dans lequel il se produit, en raison de la présence de solvants, d'abord une dissolution de la couche de non-tissé (i) et/ou de la couche membranaire (ii) et ensuite un durcissement de la couche membranaire (ii) sur la couche de non-tissé (i) lors de l'élimination du solvant.

2. Procédé pour la fabrication d'un matériau composite selon la revendication 1, le premier TPU étant identique au deuxième TPU ou différent de celui-ci, de préférence identique au deuxième TPU.

3. Procédé pour la fabrication d'un matériau composite selon la revendication 1 ou 2, la couche membranaire (ii) présentant une épaisseur de couche inférieure à 30 µm, déterminée par microscopie électronique à balayage.

4. Procédé pour la fabrication d'un matériau composite selon l'une des revendications 1 à 3, (b) comprenant :
b.1) la mise à disposition d'une solution polymère comprenant le deuxième polyuréthane thermoplastique qui est compatible avec le premier polyuréthane thermoplastique de la couche de non-tissé (i) ;
b.2) la production d'une couche membranaire (ii) à partir de la solution polymère préparée selon (b.1) par inversion des phases.

5. Procédé pour la fabrication d'un matériau composite selon l'une des revendications 1 à 4, la solution polymère comprenant en outre au moins un additif, choisi dans le groupe constitué par le polytétrahydrofuranne et un composé d'ammonium et éventuellement de l'eau, (b.2) selon la revendication 4 comprenant :
(b.2.a) la formation d'un film à partir de la solution polymère ;
(b.2.b) le chauffage du film obtenu selon (b.2.a) à une température ≥ 60°C, de préférence à une température dans la plage de 60°C à 130°C, avec obtention d'une couche membranaire poreuse (ii.2) présentant des pores d'un diamètre moyen de pore inférieur à 2000 nm, déterminé par porosimétrie au Hg selon la norme DIN 66133 ;
la solution polymère comprenant ledit au moins un autre additif de préférence dans un rapport de mélange, sur la base du poids, de deuxième polyuréthane thermoplastique:additif de 1:10 à 10:1, de préférence de 1:5 à 5:1.

6. Procédé pour la fabrication d'un matériau composite selon l'une des revendications 1 à 5,
les fibres de la couche de non-tissé (i) mise à disposition selon (a) présentant un dia mètre dans la plage de 0,01 à 100 µm, de préférence dans la plage de 1 à 50 µm, plus préférablement dans la plage de 5 à 30 µm, plus préférablement dans la plage de 10 à 30 µm, à chaque fois déterminé par microscopie électronique à balayage ; et/ou
la couche de non-tissé (i) mise à disposition selon (a) présentant une largeur de maille dans la plage de 20 à 95 µm, de préférence dans la plage de 30 à 90 µm, plus préférablement dans la plage de 40 à 80 µm, à chaque fois déterminée par microscopie électronique à balayage.

7. Matériau composite, obtenu ou pouvant être obtenu selon le procédé selon l'une des revendications 1 à 6.

8. Utilisation d'un matériau composite obtenu ou pouvant être obtenu selon le procédé selon l'une des revendications 1 à 6 pour la fabrication d'un article fonctionnel, l'article fonctionnel étant de préférence choisi dans le groupe constitué par un article vestimentaire fonctionnel, en particulier un blouson, un pantalon, un pull, une veste, un sweat à capuche, une salopette, une cape, un poncho, un manteau, un bonnet ou un chapeau, de préférence pour un vêtement de sport, tel qu'un vêtement pour le golf, le ski, la marche, la course, le jogging, une chaussure fonctionnelle, un objet fonctionnel, en particulier un sac, un sac à dos ou une tente ; un articule vestimentaire pour le bain, en particulier un costume de bain, un tankini, un bikini, un maillot de bain, une chaussure de bain ou une cape de bain ; un vêtement pour les sports d'eau, en particulier un vêtement pour la voile, le surf ou le kitesurf, de préférence un vêtement pour le surf ou le kitesurf, de préférence un article vestimentaire fonctionnel.
